Europäisches Patentamt

European Patent Office

Office européen des brevets

(19)

(11) Veröffentlichungsnummer : **0 044 569**
**B1**

(12) # EUROPÄISCHE PATENTSCHRIFT

(45) Veröffentlichungstag der Patentschrift :
**13.06.84**

(51) Int. Cl.³ : **A 01 B 73/00**

(21) Anmeldenummer : **81105817.1**

(22) Anmeldetag : **23.07.81**

(54) **Zusammen- und auffaltbares Gerät oder Werkzeugträger, insb. für landwirtschaftliche Maschinen.**

(30) Priorität : **23.07.80 US 171591**

(43) Veröffentlichungstag der Anmeldung :
**27.01.82 Patentblatt 82/04**

(45) Bekanntmachung des Hinweises auf die Patenterteilung : **13.06.84 Patentblatt 84/24**

(84) Benannte Vertragsstaaten :
**DE FR GB**

(56) Entgegenhaltungen :
**GB-A- 1 531 403**
**US-A- 3 797 580**
**US-A- 4 030 551**
**US-A- 4 151 886**

(73) Patentinhaber : **DEERE & COMPANY**
**1 John Deere Road**
**Moline Illinois 61265 (US)**

(72) Erfinder : **Winter, David Carl**
**57th Ave 5550 N.W. Des Moines**
**Iowa 50323 (US)**

(74) Vertreter : **Fricke, Joachim, Dr. et al**
**Dr. R. Döring, Dr. J. Fricke, Patentanwälte Josephspi-**
**talstrasse 7**
**D-8000 München 2 (DE)**

**Beschreibung**

Die Erfindung betrifft ein zusammen- und auffaltbares Gerät oder Werkzeugträger, insb. für landwirtschaftliche Maschinen, mit einem horizontal und quer zur Fahrtrichtung angeordneten Trägerhauptabschnitt, an dessen Enden jeweils Trägerausleger um zur Fahrtrichtung etwa parallele Achsen schwenkbar angelenkt sind, die jeweils mittels in beiden Richtungen antreibbaren hydraulischen Schwenkmotoren zwischen einer abgesenkten Arbeitsstellung und einer einwärts eingeschwenkten Transportstellung über dem Trägerhauptabschnitt bewegbar sind, und mit einem hydraulischen Steuer- und Speisekreis für die hydraulischen Schwenkmotore.

Geräte oder Werkzeugträger dieser Art sind bekannt (vgl. die GB-A-15 31 403 und die US-A-41 51 886). Dabei kann der Trägerhauptabschnitt eine größere oder eine kleinere Länge als die Gesamtlänge der beiden Trägerausleger aufweisen. Die beiden Trägerausleger werden gleichzeitig ein- und ausgeschwenkt und zwar jeweils mit gleichen Geschwindigkeiten und in jeweils die gleiche horizontale Transportstellung bzw. in die gleiche schräg nach oben und nach innen eingeschwenkte Transportstellung. Es ist dabei auch möglich an die freien Enden der Trägerausleger noch zusätzliche Verlängerungsteile starr oder gelenkig anzubringen. In der Regel erfolgt das Verschwenken mit Hilfe von doppelt wirkenden hydraulischen Zylindern, die auch innerhalb der hohlen Träger angeordnet sein können (vgl. US-A-40 30 551). Es ist aber auch möglich Hydraulikmotore außerhalb der Träger anzuordnen und an den relativ zueinander schwenkbaren Teilen anzulenken (vgl. US-A-37 97 580). Ein zugehöriger hydraulischer Speise- und Steuerkreis weist in der Regel eine Pumpe und einem Sumpf auf, sowie ein vom Fahrer des Fahrzeuges bedienbares Mehrwege/Mehrstellungsventil zur Richtungssteuerung der Arbeitsweise der Hydraulikmotoren. Dabei sind die Hydraulikmotore der beiden Trägerausleger parallel zueinander geschaltet. Den Druckmittelzuleitungen beider Hydraulikmotore kann dabei ein gemeinsames oder je ein gesondertes Steuerventil zugeordnet sein (vgl. US-A-40 30 551).

Die Tendenz der Entwicklung geht dahin, daß aufgrund der Vergrößerung der einzelnen landwirtschaftlichen Betriebe auch die verwendeten Ackerschlepper immer stärker werden, so daß auch die durch die Ackerschlepper gezogenen oder getragenen Geräte oder Werkzeugträger in ihrer Arbeitsbreite fortlaufend größer werden. Dennoch muß gewährleistet sein, daß der Ackerschlepper mit den nachgeschleppten oder getragenen Geräten oder Werkzeugträgern während des Transportes über die öffentlichen Straßen eine vorbestimmte Transportbreite nicht überschreiten. Damit wird die maximal zulässige Breite des Trägerhauptabschnittes begrenzt. Ist die Gesamtbreite der Trägerausleger größer als die Breite oder Länge des Trägerhauptabschnittes, können die Trägerausleger nicht mehr um 180° über den Trägerhauptabschnitt einwärts geschwenkt werden. Es ergeben sich daher in den bekannten Fällen relativ große Winkel zwischen dem Trägerhauptabschnitt und den Trägerauslegern in der Transportstellung und damit entsprechend große Bauhöhen der Geräte oder Werkzeugträger. Eine solche Transporteinheit ist relativ instabil und bezüglich von herabhängenden Zweigen oder Durchfahrten oder dgl. unhandlich. Bei sich vergrößernden Arbeitsbreiten der Geräte oder Werkzeugträger kommt noch ein besonderes Problem dann hinzu, wenn das Gerät in hügeligem Gelände eingesetzt werden soll. In diesem Fall ist es erforderlich die Ausleger gegenüber der normalen horizontalen Arbeitsstellung um wenige Grad geneigt anzuheben, um z. B. bei einem Wendevorgang zu verhindern, daß die äußeren Enden des Gerätes oder Werkzeugträgers mit dem Boden in Berührung gelangen. Es ist zu diesem Zweck bekannt, spezielle und zusätzliche Hydraulikmotore vorzusehen, die in diesen Fällen betätigt wurden, um die schwach eingeschwenkte Stellung der Trägerausleger zu verwirklichen. Dies führt zu relativ komplexen anfälligen Steuersystemen, die überdies sehr teuer sind.

Es ist Aufgabe der Erfindung ein zusammen- und auffaltbares Gerät oder Werkzeugträger der eingangs näher bezeichneten Art so weiterzubilden, daß die aufgezeigten Nachteile vermieden werden und auch bei sehr großer Arbeitsbreite eine kompakte Einheit in der Transportstellung des Gerätes oder des Werkzeugträgers erhalten wird, ohne daß es dazu besonderer Aufmerksamkeit seitens der Bedienungsperson bedarf, und daß ohne zusätzliche komplizierte Einrichtungen auf einfache Weise die Voraussetzung geschaffen wird, daß bei Einsatz im hügeligen Gelände bei Bedarf die Trägerausleger in der Arbeitsstellung schwach angehoben werden können.

Diese Aufgabe wird erfindungsgemäß dadurch gelöst, daß der hydraulische Steuer- und Speisekreis in der beim Einschwenken eines der Trägerausleger wirksamen Druckmittelzuleitung zu einem der Schwenkmotoren eine Druck- oder Strömungsdrosseleinrichtung aufweist, der eine Umgehungsleitung zugeordnet ist, daß eine Steuereinrichtung vorgesehen ist, mittels der die Druckmittelzuleitung mit der Drosseleinrichtung oder mit der Umgehungsleitung verbindbar ist, und daß die Steuereinrichtung in Abhängigkeit vom Erreichen einer vorbestimmten relativen Schwenkstellung zwischen dem Trägerhauptabschnitt und einem Trägerausleger selbsttätig betätigbar ist derart, daß die beiden Trägerausleger auf einem vorbestimmten Abschnitt ihres Schwenkweges aus der Arbeitsstellung in die Transportstellung unterschiedlich schnell verschwenkbar sind. Aufgrund dieser Anordnung ist es ohne besondere Aufmerksamkeit seitens der Bedienungsperson möglich, während vorbestimmter Abschnitte der Einschwenkwege der beiden Trägerausleger diese mit unterschiedlicher Geschwindigkeit einzuschwenken. Damit wird erstmals die Möglichkeit geschaffen die Trägerausleger beim Einwärtsschwenken in unterschiedliche Transportstellungen zu schwenken. Damit erzielt man eine wesentlich kompaktere und lagestabilere Transporteinheit selbst dann, wenn die Trägerausleger eine gesamte Arbeitsbreite aufweisen, die wesentlich größer ist als die Arbeitsbreite des Trägerhauptabschnittes. Es ist daher auch möglich an die üblichen Trägerausleger bei Bedarf starre Verlängerungsstücke anzubringen, die zusammen mit den Trägerauslegern in die Transportstellung bzw. aus dieser in die Arbeitsstellung geschwenkt werden, ohne daß eine sonst übliche zusätzliche Gelenkverbindung und eine sonst übliche zusätzliche Betätigungsvorrichtung zum Verschwenken dieser Verlängerungsstücke erforderlich sind. Aufgrund der unterschiedlichen Einschwenkgeschwindigkeiten der Trägerausleger kann der eine Trägerausleger um 180° gegenüber dem Trägerhauptabschnitt in eine zum Trägerhauptabschnitt parallele Stellung oberhalb des Trägerhauptabschnittes geschwenkt werden, während der andere Trägerausleger in eine gegenüber diesen schräge und darübergeschachtelte Stellung einwärts geschwenkt werden kann. Dieses Einschwenken in unterschiedliche Stellungen erfolgt automatisch und ohne daß sich die Trägerausleger dabei gegenseitig stören. Dies wird durch die zwangsweise erreichten unterschiedlichen Einschwenkgeschwindigkeiten der beiden Trägerausleger erreicht. Vorteilhafterweise sind die beim Ausschwenken der beiden Trägerausleger in die Arbeitsstellung wirksamen Druckmittelzuleitungen zu den Druckmittelmotoren so ausgebildet und angeordnet, daß beide Trägerausleger mit einer im wesentlichen gleichen Geschwindigkeit ausgeschwenkt werden. Dies ist möglich, da die Trägerausleger von vorne herein unterschiedliche Transportstellungen und damit unterschiedlich lange Schwenkwege bis in die Arbeitsstellung zurücklegen müssen, so daß das Ausschwenken bei gleichen Geschwindigkeiten ebenfalls zu keinem gegenseitigen Konflikt zwischen den beiden Trägerauslegern führt.

Es ist von besonderem Vorteil, wenn die unterschiedliche Schwenkgeschwindigkeit beim Verschwenken der Trägerausleger aus der Arbeitsstellung in die Transportstellung nur auf vorbestimmten Abschnitten des Schwenkweges erfolgt. Dadurch wird es möglich auf dem einwärts gerichteten Schwenkweg auch Schwenkwegabschnitte vorzusehen, bei denen die beiden Trägerausleger mit gleicher Geschwindigkeit einwärts geschwenkt werden. Dies kann mit Vorteil dazu ausgenutzt werden, daß die Steuereinrichtung in der Weise angeordnet wird, daß bei Einschwenken der beiden Trägerausleger auf einem ersten Abschnitt des Schwenkweges, gerechnet von der Arbeitsstellung aus, beide Trägerausleger mit der gleichen Geschwindigkeit einschwenkbar sind und erst bei Erreichen eines vorbestimmten Schwenkwinkels die Steuereinrichtung für ein unterschiedlich schnelles Weiterschwenken der Trägerausleger umschaltbar ist. Dieser erste Schwenkweg mit gleichen Geschwindigkeiten kann auf einen Winkel von etwa 5°, gemessen von der horizontalen Arbeitsstellung aus gerechnet werden, so daß dieser erste Schwenkwinkel dem Fahrer die Möglichkeit gibt, bei Arbeiten in hügeligem Gelände die Trägerausleger geringfügig gegenüber der normalen Arbeitsstellung anzuheben, um beim Wenden des Gerätes zu verhindern, daß die Enden der Ausleger in Kontakt mit dem Boden gelangen. Sobald ein Einwärtsschwenken über diesen vorbestimmten Winkel hinaus erfolgt, erfolgt auch automatisch die Umschaltung der Steuereinrichtung so, daß bei Winkeln größer als z. B. 5° die Trägerausleger mit der vorgesehenen unterschiedlichen Geschwindigkeit einwärts bis in die Transportstellung schwenken.

Bei der neuen Ausbildung wird für jeden Trägerausleger nur ein Hydraulikmotor benötigt. Es werden dabei zweckmäßigerweise doppelt wirkende Hydraulikzylinder eingesetzt, die gleiche Verdrängungen aufweisen können und mit der gleichen Druckmittelquelle verbunden sind. Auch genügt ein einziges, von der Bedienungsperson betätigtes Mehrwege/Mehrstellungsventil zur Steuerung des Einwärtsschwenkens und des Auswärtsschwenkens.

Entsprechend der unterschiedlichen Transportstellung sind den Trägerauslegern auch unterschiedlich ausgebildete und angeordnete Anschläge zugeordnet, an die sich die Ausleger in der Transportstellung anlegen können, so daß die Hydraulikeinrichtungen entlastet werden.

Die neue Anordnung ermöglicht es auch herkömmliche Geräte oder Werkzeugträger in der Arbeitsbreite nachträglich zu vergrößern.

Die Erfindung wird nachfolgend anhand schematischer Zeichnungen an einem Ausführungsbeispiel näher erläutert.

Es zeigen :

Figur 1a eine rückwärtige Ansicht eines faltbaren Werkzeugträgers gemäß der Erfindung, der an einem Ackerschlepper montiert ist und sich in seiner Arbeitsstellung befindet.

Figur 1b eine Ansicht ähnlich der nach Fig. 1a, bei der die Ausleger in einer in eine Zwischenstellung von annähernd 5° gegenüber der Horizontalen angehobenen Stellung gezeigt sind.

Figur 1c eine ähnliche Darstellung wie in Fig. 1a, wobei jedoch die Ausleger in einer Stellung etwa auf der Hälfte ihres Einschwenkweges gezeigt sind.

Figur 1d in ähnlicher Darstellung wie Fig. 1a den Werkzeugträger in seiner Transportstellung.

Figur 2 eine perspektivische Ansicht von oben auf den Anlenkbereich des Auslegers auf der rechten Seite des Werkzeugträgers, wobei sich der Ausleger in der Stellung nach Figur 1a befindet, wobei in dieser Stellung das Betätigungsglied eines Steuerventils nach der vorliegenden Erfindung sich in seiner zurückgedrückten Stellung befindet.

Figur 3 eine perspektivische Ansicht des Endes des Anlenkbereiches des rechten Auslegers, der sich in einer Stellung nach Fig. 1d befindet.

Figur 4 ein Schaltdiagramm des hydraulischen Systems und

Figur 5 im vergrößerten Maßstabe die rechte Anlenkstelle des Auslegers in der Stellung nach Figur 1d.

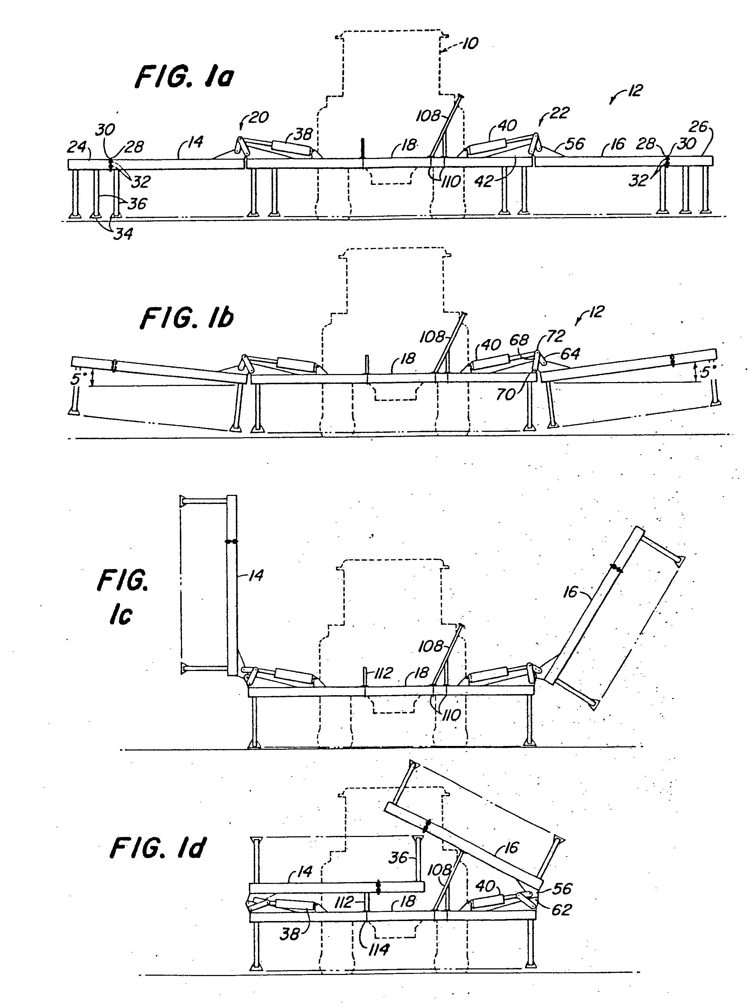

In Figur 1 ist ein Ackerschlepper 10 gezeigt, der einen um 180° einfaltbaren Werkzeugträger 12 zeigt, der an der Dreipunktkupplung oder dgl. (nicht gezeigt) des Ackerschleppers abgestützt ist und damit in senkrechter Richtung gegenüber dem Boden anhebbar unterstützt ist. An dem Werkzeugträger kann ein nicht dargestelltes rückwärtiges Rad befestift sein, das die Anhebebewegung unterstützt, falls dies für die Abstützung und das Anheben notwendig erscheint. Der Werkzeugträger 12 ist allgemein von üblicher Gestaltung. Er weist einen ersten und einen zweiten Trägerausleger 14 und 16 auf. Diese sind jeweils an den Enden eines Trägerhauptabschnittes 18 mit Hilfe von Gelenken 20 bzw. 22 angelenkt. Derartige Werkzeugträger sind im Handel erhältlich. Es wird beispielsweise auf den Reihenkultivator Modell 85 der Fa. John Deere hingewiesen. Der Werkzeugträger 12 ist jedoch im dargestellten Beispiel durch Anbringung von Verlängerungsstücken 24 und 26 and die Enden der Trägerauslegerrahmen 14 und 16 vergrößert, so daß die Gesamtbreite der Auslegerrahmen größer ist als die Breite des Trägerhauptabschnittes 18. Zur Anbringung sind Platten 28 und 30 an die Enden der Auslegerrahmen 14 und 16 und an die innenliegenden Enden der Verlängerungen 24 und 26 angeschweißt. Diese Platten sind mit Bolzen 32 oder dgl. Einrichtungen zusammengespannt. Die Verlängerungen 24 und 26 können auch als einstückige Teile der Auslegerrahmen ausgebildet sein. Bodenbearbeitungswerkzeuge 34, z. B. Kultivatorpflüge, werden von dem Werkzeugträger 12 mit Hilfe von Tragarmen 36 unterstützt. Die Verlängerungen 24 und 26 können z. B. dazu dienen, um einen üblichen Kultivator für 16 Reihen in einen solchen für die Bearbeitung von 18 Reihen zu ergänzen.

Hydraulische Schwenkmotoren in Form von Hydraulikzylindern 38 und 40 sind so angeordnet, daß ihre Kolbenstangenenden mit den jeweiligen Gelenken 20 und 22 und die Zylinderenden mit dem Trägerhauptabschnitt 18 verbunden sind. Die Hydraulikzylinder sind gemeinsam mit einer Hydraulikquelle « P » über den hydraulischen Anschluß des Ackerschleppers 10 verbunden. Die doppelwirkenden Hydraulikzylinder können die Ausleger zwischen der ausgefalteten Arbeitsstellung nach Fig. 1a und der zusammengefalteten Transportstellung nach Fig. 1d verschwenken. In der bevorzugten Ausführungsform sind die Hydraulikzylinder 38 und 40 im wesentlichen gleich ausgebildet und weisen gleiche Verdrängungen auf.

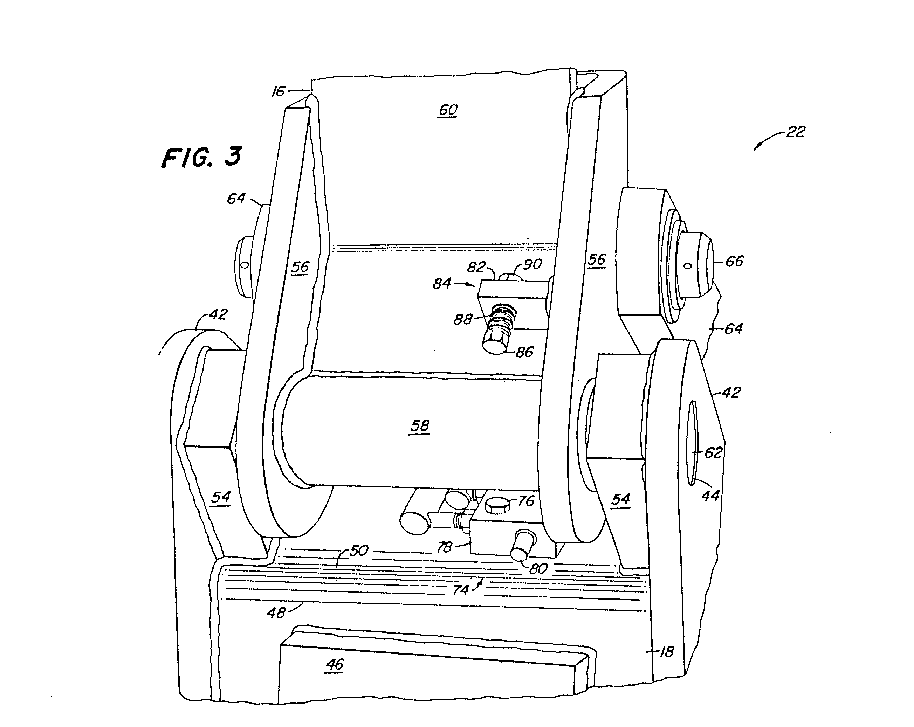

Die Gelenke 20 und 22 sind im wesentlichen identisch so daß nur das Gelenk 22 auf der rechten Seite der Figur 1 näher beschrieben zu werden braucht. Seitliche Halterungen 42 erstrecken sich von dem Trägerhauptabschnitt 18 nach oben und weisen Lageraugen 44 nach Fig. 3 auf. Die Halterungen 42 erstrecken sich jeweils seitlich außerhalb der Endwand 46 des Trägerhauptabschnittes. Ein Verbindungsteil 48 ist an den Halterungen 42 und an der Endwand 46 angeschweißt. Dieser Abschnitt 48 erstreckt sich von der Endwand 46 in senkrechter Richtung und anschließend an einen Biegebereich 50 im wesentlichen in horizontaler Richtung und endet an einer Wand 52. Ein zur Verstärkung dienendes Abstandselement 54 ist an jeder Seite des Gelenkes 22 an den seitlichen Halterungen 42 und dem Verbindungsabschnitt 48 angeschweißt.

Das Gelenk 22 umfaßt außerdem seitliche Halter 56, die sich vom Rahmen 16 des Trägerauslegers nach oben erstrecken und zwar innerhalb des Bereiches zwischen den Seitlichen Halterungen 42. Die Halter 56 erstrecken sich von dem Ende des Auslegerrahmens 16 seitlich in Richtung auf den Hauptrahmen 18. Ein rohrförmiges Glied 58 ist zwischen den seitlichen Haltern 56 angeschweißt. Die Endplatte 60 des Auslegerrahmens ist an den Seitenhaltern 56 und dem rohrförmigen Glied 58 angeschweißt. Ein Gelenkbolzen 62 ist durch die Lageraugen 44, das Abstandsglied 54 und das rohrförmige Element 58 gesteckt, um den Trägerausleger 16 gegenüber dem Trägerhauptabschnitt 18 um eine allgemein horizontale und sich von vorne nach hinten erstreckende Achse des Gelenkbolzens schwenkbar zu verbinden.

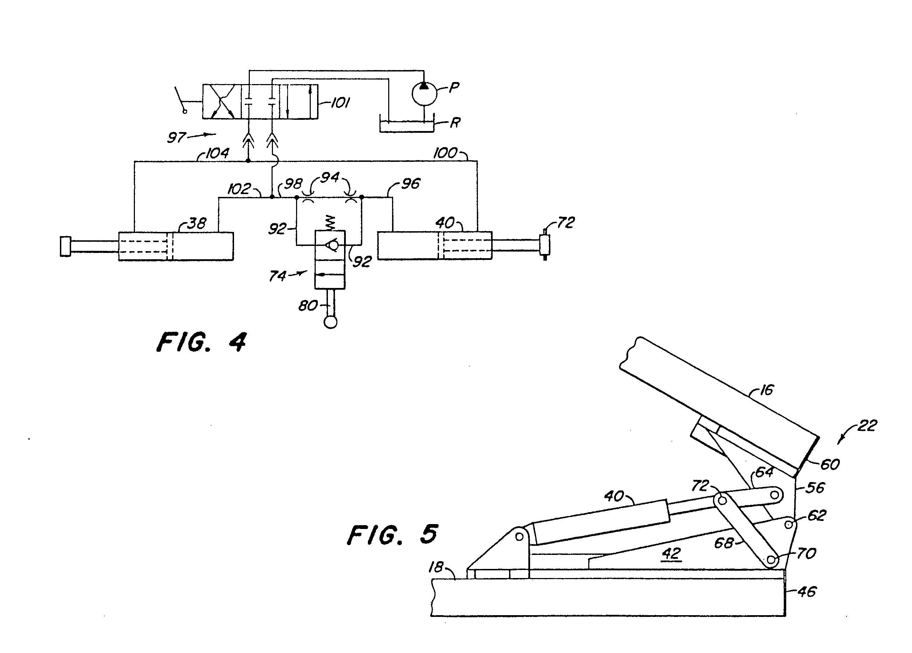

Verbindungsglieder oder Lenker 64 sind an einem Ende der Halter 56 des Auslegers bei 66 angelenkt. Weitere Glieder oder Lenker 68 (Fig. 1b) sind mit einem Ende an den Haltern 42 des Trägerhauptabschnittes über Gelenkzapfen 70 angelenkt. Die jeweils entgegengesetzten Enden der Lenker 64 und 68 sind gelenkig miteinander und mit dem Ende der Kolbenstange des Arbeitszylinders 40 über einen Gelenkstift 72 verbunden. Wenn damit der Zylinder 40 eingefahren wird, wird der Ausleger 16 um die Achse des Stiftes 62 im Gegenuhrzeigersinne gemäß den Figuren 1a bis 1d und der Figur 5 verschwenkt. Wird dagegen der Zylinder ausgefahren wird der Ausleger 16 im Uhrzeigersinne verschwenkt. Die Ausbildung und die Arbeitsweise des Gelenkes 20 auf der linken Seite des Werkzeugträgers ist im wesentlichen identisch zu dem beschriebenen Gelenk 22. Solche Gelenke, soweit sie bisher beschrieben sind, sind auch bei den oben erwähnten bekannten Werkzeugträgern vorgesehen.

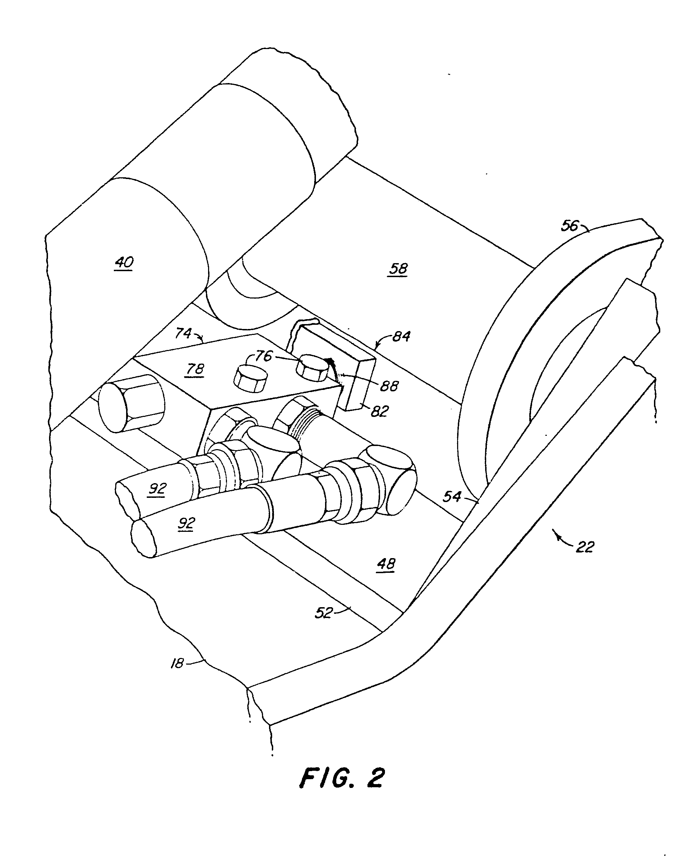

Wie aus den Figuren 2 bis 4 hervorgeht, ist eine Ventileinrichtung 74 am Trägerhauptabschnitt 18 nahe dem rechten Gelenk 22 mit Hilfe von zwei Bolzen 76 befestigt. Diese ragen durch das Gehäuse 78 des Ventils und durch den sich horizontal erstreckenden Bereich des Verbindungsabschnittes 48. Ein Betätigungsglied 80 ragt seitlich aus dem Ventilgehäuse heraus und ist in Richtung auf die ausgefahrene Stellung vorgespannt. In dieser Stellung nimmt das Ventil die aus Fig. 4 ersichtliche Position ein, in der eine ungedrosselte Strömung des Hydraulikfluids in Richtung nach rechts allein möglich ist. Ein Stützblock 82 einer zur Betätigung des Ventils dienenden Armes 84 ist durch Schweißen oder auf andere Weise an der Innenseite des seitlichen Halters 56 des Auslegers befestigt. Dieser Arm trägt einen Schraubbolzen 86. Der Kopf dieses Schraubbolzens beschreibt einen Kreisbogen, wenn das Gelenk um den Gelenkzapfen 62 verschwenkt wird. Der Kreisbogen schneidet das Ende des Betätigungsgliedes 80. Der Bolzen 86 ist in Richtung auf das Betätigungsglied 80 gemäß Fig. 2 durch eine Feder 88 vorgespannt, die zwischen dem Stützblock 82 und dem Kopf des Schraubbolzens unterstützt ist. Zwei Muttern 90 sind gemäß Fig. 3 auf dem Schaft aufgeschraubt, um den Bolzen 86 in der eingestellten Stellung auf dem Stützblock 82 zu halten. Durch Drehen der Muttern 90 kann die Gelenkstellung, an der das Betätigungsglied 80 eingeschoben oder niedergedrückt wird, eingestellt werden. In der bevorzugten Ausführungsform ist der Bolzen 86 so einjustiert, daß das Betätigungsglied so lange eingedrückt bleibt, solange der Ausleger 16 sich in einem Bereich zwischen der horizontalen Arbeitsstellung nach Fig. 1a und einer Winkelstellung von etwa 5° gegenüber der Horizontalen (Fig. 1b) befindet. Die Ventileinrichtung 74 und der das Ventil betätigende Arm 84 können nachträglich im Bereich des Gelenkes eines vorhandenen oder üblichen faltbaren Werkzeugträgers angebracht werden, um so das Zusammenfalten und Auffalten des Werkzeugträgers zu modifizieren.

Eine hydraulische Leitung 92 verbindet die Ventileinrichtung 74 mit dem Hydraulikkreis, der zur Speisung des auf der rechten Seite angeordneten Schwenkzylinders 40 nach Fig. 4 dient. Zwei Drosseleinrichtungen 94 sind in der Hydraulikleitung 96 zu dem Arbeitszylinder 40 in Reihe angeordnet. Die Ventileinrichtung 74 ist ihrerseits parallel zu den Drosseln 94 vorgesehen. Die parallele Kombination der Drosseln 94 und der Ventileinrichtung 74 ist als ganzes an einen Stutzen des hydraulischen Anschlusses 97 eines Ackerschleppers angeschlossen, und zwar über die Leitung 98 Der Anschluß kann auch an andere hydraulische Druckmittelquellen erfolgen. Der Schwenkzylinder 40 ist doppelwirkend ausgebildet und zu diesem Zweck mit einer weiteren Hydraulikleitung 100 an den anderen Stutzen des Anschlusses 97 angeschlossen. Hydraulikfluid kann bei Bedarf über eine Pumpe « P » von einem Hydrauliksumpf « R » und über ein übliches, durch die Bedienungsperson steuerbares Ventil 101 des Ackerschleppers den Schwenkzylindern 38 und 40 gleichzeitig zugeführt werden, um diese auszufahren bzw. einzufahren. Der auf der linken Seite angeordnete Schwenkzylinder 38 ist an die Anschlüsse 97 des Ackerschleppers durch Leitungen 102 und 104 parallel zu den entsprechenden Leitungen 98 und 100 verbunden.

Wenn das Betätigungsglied 80 der Ventileinrichtung durch den Betätigungsarm 84 niedergedrückt wird, kann Hydraulikfluid in beiden Richtungen frei durch die Ventileinrichtung 74 und zwischen den Leitungsabschnitten 96 und 98 fließen, wobei die Drosseln 94 umgangen werden. Wenn das Betätigungsglied 80 dagegen ausgefahren ist, befindet sich die Ventileinrichtung in der in Fig. 4 gezeigten Stellung. In dieser ist die Strömung aus dem Leitungsabschnitt 96 nach links in den Leitungsabschnitt 98 unterbunden. Jedoch kann Hydraulikfluid durch ein Rückschlagventil der Ventileinrichtung 74 frei nach rechts strömen.

Bei Betrieb sei angenommen, daß sich der Werkzeugträger 12 in der Arbeitsstellung nach Fig. 1a befindet. Hierbei wirkt der Betätigungsarm 84 auf das Betätigungsglied 80, um die Ventileinrichtung 74 in einer Stellung zu halten, in der der Ventilschieber sich in der obersten Stellung der Darstellung nach Fig. 4 befindet. In dieser Stellung kann Hydraulikfluid frei von dem Schwenkzylinder 40 durch die Leitungsabschnitte 96 und 98 fließen, und zwar unter Umgehung der Drosseleinrichtungen 94. Wenn die Bedienungsperson das Steuerventil 101 auf dem Ackerschlepper so betätigt, daß Druckmittel den Leitungen 100 und 104 zugeleitet wird, fahren beide Schwenkzylinder 38 und 40 ein. Dabei werden beide Trägerausleger 14 und 16 gemeinsam und mit annähernd der gleichen Geschwindigkeit angehoben, und zwar so lange, bis der Betätigungsarm 84 das Betätigungsglied 80 der Ventileinrichtung 74 freigibt, so daß das Betätigungsgleid 80 nach außen fährt. Dadurch wird der Schieber der Ventileinrichtung 74 verschoben, so daß nunmehr das Hydraulikfluid die Drosseleinrichtungen 94 nicht mehr umgehen kann, solange der Arbeitszylinder 40 weiterhin eingefahren wird. Der Schraubbolzen 86 an dem Betätigungsarm 84 ist so eingestellt, daß die beiden Trägerausleger 14 und 16 gemeinsam während des ersten Bereiches des Einschwenkweges synchron und mit gleicher Geschwindigkeit eingeschwenkt oder nach oben geschwenkt werden, und zwar vorzugsweise bis zur Erreichung einer Winkelstellung von etwa 5° gegenüber der Horizontalen (vergl. Fig. 1b), um so das Wenden auf hügeligem Land zu erleichtern. Wenn danach die Einfahrbewegung der Schwenkzylinder fortgesetzt wird, muß das Hydraulikfluid von dem einen Enden des Arbeitszylinders aufgrund der Stellung des Ventils 74 durch die Drosseleinrichtungen 94 fließen. Dadurch wird der auf der rechten Seite angelenkte Trägerausleger 16 in seiner Zusammenfaltbewegung verlangsamt (vergl. Fig. 1c). Die Folge ist, daß der Trägerausleger 14 am anderen Ende seine eingefaltete Transportstellung zuerst erreicht. In der bevorzugten Ausführungsform sind die Drosseleinrichtungen 94 so ausgewählt, daß die Einfaltgeschwindigkeit des Trägerauslegers 16 am rechten Ende etwa das 0,577-fache der Faltgeschwindigkeit des Trägerauslegers 14 am linken Ende des Werkzeugträgers erreicht, wenn die Faltbewegung den Einschwenkweg jenseits des vorgewählten Winkels erreicht, bei dem das Betätigungsglied 80 zum Ausfahren freigegeben wird.

Wenn der Ausleger 14 seine voll eingefaltete Stellung erreicht, welche in der bevorzugten Ausführungsform eine Schwenkstellung von 180° gegenüber der Arbeitsstellung nach Fig. 1a beträgt, setzt der auf der rechten Seite vorgesehene Ausleger seine Einfaltbewegung fort, da der Schwenkzylinder 40 solange eingefahren wird, bis sich das Verlängerungsstück 26 dieses Auslegers in einer ausgewählten Stellung oder Überlappungsstellung über den Werkzeughaltern 36 der Verlangerung 24 des linken Auslegers befindet (vergl. die Stellung nach Fig. 1d). In der bevorzugten Ausführungsform ist diese vorgewählte Transportstellung eine Schwenkstellung von 150° gegenüber der Arbeitsstellung nach Fig. 1a. Auf jeden Fall sollte der Winkel der Transportstellung geringfügig kleiner sein als ein Winkel, bei dem zwischen den Enden oder Verlängerungen der Ausleger eine gegenseitige Störung eintritt. Eine Transportstütze 108 ist auf dem Trägerhauptabschnitt 18 mit Hilfe von zwei U-förmigen Haltern 110 befestigt, um zu verhindern, daß der Ausleger 16 über die gewünschte Transportstellung hinausschwenken kann. Dadurch wird zugleich der Ausleger 16 während des Transportes starr an dem Trägerhauptabschnitt abgestützt. Ein anderer entsprechender Stützteil 112 des Trägerhauptabschnittes 18 kann an diesem mit einem Halter 114 befestigt sein, um in gleicher Weise den Ausleger 14 in der um 180° zusammengefalteten Transportstellung starr abzustützen.

Um die Ausleger aus der Transportstellung nach Fig. 1d in die Arbeitsstellung nach Fig. 1a auszufalten, werden die Schwenkzylinder 38 und 40 ausgefahren, indem Hydraulikfluid unter Druck in die Leitungen 102 und 96 geführt wird. Da die Ventileinrichtung ein nur in einer Richtung durchströmbares Rückschlagventil aufweist, kann in der Stellung des Ventils 74, die in Figur 4 gezeigt ist, das Druckmittel nun frei aus dem Leitungsabschnitt 98 in den Leitungsabschnitt 96 unter Umgehung der Drosseln 94 fließen. Damit können beide Schwenkzylinder 38 und 40 annähernd mit der gleichen Geschwindigkeit ausfahren, um die Trägerausleger 14 und 16 mit gleicher Schwenkgeschwindigkeit aufzufalten. Die Folge ist, daß der auf der rechten Seite vorgesehene Trägerausleger 16 sich rechtzeitig außerhalb der Schwenkbahn des Trägerauslegers 14 auf der linken Seite befindet, wenn beide Ausleger gleichzeitig aus der Transportstellung in Richtung auf die Arbeitsstellung aufgefaltet werden.

Die beschriebene hydraulische Anordnung gestattet es ohne Schwierigkeiten Auslegerverlängerungen an einen üblicherweise bis zu 180° zusammenfaltbaren Werkzeugträger nachträglich anzufügen, ohne daß teure Umrüstungen notwendig sind. Gleichzeitig wird aufgrund der neuen Ausbildung auch in diesem Falle ein Zusammenfalten und Auffalten der Ausleger ohne gegenseitige Störung ermöglicht. Auch gestattet die Anordnung auf einfache Weise das gleichzeitige Anheben der beiden Trägerausleger mit gleicher Geschwindigkeit während des ersten Abschnittes des Faltweges, um so das Wenden des Ackerschleppers auf dem Feld zu erleichtern.

## Ansprüche

1. Zusammen- und auffaltbares Gerät oder Werkzeugträger (12), insb. für landwirtschaftliche Maschinen, mit einem horizontal und quer zur Fahrtrichtung angeordneten Trägerhauptabschnitt (18), an dessen Enden jeweils Trägerausleger (14, 16) um zur Fahrtrichtung etwa parallele Achsen schwenkbar angelenkt sind, die jeweils mittels in beiden Richtungen antreibbaren hydraulischen Schwenkmotoren (38, 40) zwischen einer abgesenkten Arbeitsstellung und einer einwärts eingeschwenkten Transportstellung über den Trägerhauptabschnitt (18) bewegbar sind, und mit einem hydraulischen Steuer- und Speisekreis für die hydraulischen Schwenkmotore (38, 40), dadurch gekennzeichnet, daß der hydraulische Steuer- und Speisekreis in der beim Einschwenken eines der Trägerausleger (16) wirksamen Druckmittelzuleitung (96, 98) zu einem der Schwenkmotoren (40) eine Druck- oder Strömungsdrosseleinrichtung (94) aufweist, der eine Umgehungsleitung (92) zugeleitet ist, daß eine Steuereinrichtung (74) vorgesehen ist, mittels der die Druckmittelzuleitung (96, 98) mit der Drosseleinrichtung (94) oder der Umgehungsleitung (92) verbindbar ist, und daß die Steuereinrichtung (74) in Abhängigkeit vom Erreichen einer vorbestimmten relativen Schwenkstellung zwischen dem Trägerhauptabschnitt (18) und einem Trägerausleger (14, 16) selbsttätig betätigbar ist, derart, daß die beiden Trägerausleger (14, 16) auf einem vorbestimmten Abschnitt ihres Schwenkweges aus der Arbeitsstellung in die Transportstellung unterschiedlich schnell verschwenkbar sind.

2. Gerät oder Werkzeugträger nach Anspruch 1, bei dem die Länge des Trägerhauptabschnittes (18) kleiner als die Summe der Länge der Trägerausleger (14, 16) ist, dadurch gekennzeichnet, daß die Transportstellungen der beiden Ausleger (14, 16) unterschiedlich sind und — bezogen auf die jeweilige Arbeitsstellung — der eine Ausleger (14) in die Transportstellung um 180° und der andere Ausleger um einen Winkel zwischen 90° und 180° verschwenkbar ist.

3. Gerät oder Werkzeugträger nach Anspruch 1, dadurch gekennzeichnet, daß die beim Ausschwenken der beiden Trägerausleger (14, 16) wirksamen Druckmittelzuleitungen (100, 104) so ausgebildet und angeordnet sind, daß beide Ausleger mit im wesentlichen gleichen Geschwindigkeiten aus der Transport, in die Arbeitsstellung ausschwenkbar sind.

4. Gerät oder Werkzeugträger nach einem der Ansprüche 1 bis 3, dadurch gekennzeichnet, daß in der Umgehungsleitung (92) ein nur in Richtung zu dem einen Schwenkmotor (40) hin durchströmbares Rückschlagventil angeordnet ist.

5. Gerät oder Werkzeugträger nach einem der Ansprüche 1 bis 4, dadurch gekennzeichnet, daß die Steuereinrichtung (74) in der Weise angeordnet ist, daß bei Einschwenken der beiden Trägerausleger (14, 16) auf einem ersten Abschnitt des Schwenkweges aus der Arbeitsstellung beide Trägerausleger (14, 16) mit gleicher Geschwindigkeit einschwenkbar sind und bei Erreichen eines vorbestimmten Schwenkwinkels die Steuereinrichtung (74) für ein unterschiedlich schnelles Weiterschwenken umschaltbar ist.

6. Gerät oder Werkzeugträger nach Anspruch 1, dadurch gekennzeichnet, daß die Steuereinrichtung (74) ein Zweistellungsventil ist, welches das nur in der einen Stellung des Ventils wirksame Rückschlagventil aufweist.

7. Gerät oder Werkzeugträger nach Anspruch 6, dadurch gekennzeichnet, daß das Zweistellungsventil mit seinem Betätigungsglied (80) nahe der Anlenkstelle (58) eines Trägerauslegers (16) in dem Schwenkweg eines mit dem Trägerausleger (16) mitschwenkenden Teils (84) angeordnet ist.

8. Gerät oder Werkzeugträger nach Anspruch 1, dadurch gekennzeichnet, daß die vorbestimmte Schwenkstellung, in der die Steuereinrichtung (74) betätigbar ist, mit der Arbeitsstellung einen Winkel von etwa 5° einschließt.

9. Gerät oder Werkzeugträger nach Anspruch 1, dadurch gekennzeichnet, daß die Schwenkmotore doppelt wirkende Hydraulikzylinder (38, 40) mit gleichen Verdrängungen und mit an die gleiche Druckmittelquelle angeschlossenen Druckmittelzuleitungen (96, 100 ; 102, 104) sind.

10. Gerät oder Werkzeugträger nach Anspruch 2, dadurch gekennzeichnet, daß den beiden Trägerauslegern (14, 16) Rahmenfeste Anschläge (108, 112) unterschiedlicher Anordnung zur Anlage in der jeweiligen Transportstellung zugeordnet sind.

**Claims**

1. A device or implement carrier (12) which can be folded together and unfolded, in particular for agricultural machines, having a main carrier section (18) which is arranged horizontally and transversely with respect to the direction of travel and to the respective ends of which carrier arms (14, 16) are mounted pivotally about axes substantially parallel to the direction of travel, the arms each being movable by means of hydraulic pivoting motors (38, 40) which are drivable in both directions, between a lowered operating position and an inwardly pivoted transportation position above the main carrier section (18), and further comprising a hydraulic control and feed circuit for the hydraulic pivoting motors (38, 40) characterised in that, in the pressure fluid feed line (96, 98) to one of the pivoting motors (40), said line being operative upon inward pivotal movement of one of the carrier arms (16), the hydraulic control and feed circuit has a pressure or flow throttling means (94) to which a by-pass line (92) is connected, that there is provided a control means (74) for connecting the pressure fluid feed line (96, 98) to the throttling means (94) or the by-pass line (92), and that the control means (74) is automatically actuable in dependence on the attainment of a predetermined relative pivotal position as between the main carrier section (18) and a carrier arm (14, 16), such that the two carrier arms (14, 16) are pivotal at different speeds over a predetermined portion of their pivotal movement out of the operating position into the transportation position.

2. A device or implement carrier according to claim 1, wherein the length of the main carrier section (18) is less than the sum of the length of the carrier arms, characterised in that the transportation positions of the two arms (14, 16) are different and — with respect to the respective operating position — one arm (14) can be pivoted into the transportation position through 180° and the other arm can be pivoted through an angle between 90° and 180°.

3. A device or implement carrier according to claim 1, characterised in that the pressure fluid feed lines (100, 104) which are operative upon outward pivotal movement of the two carrier arms (14, 16) are so designed and arranged that both arms can be pivoted from the transportation position into the operating position at substantially the same speeds.

4. A device or implement carrier according to one of claims 1 to 3, characterised in that disposed in the by-pass line (92) is a check valve through which fluid can flow only towards the one pivoting motor (40).

5. A device or implement carrier according to one of claims 1 to 4, characterised in that the control means (74) is arranged in such a way that, upon inward pivotal movement of the two carrier arms (14, 16), both carrier arms (14, 16) are pivotal at the same speed over a first portion of the pivotal movement from the operating position, and, when a predetermined angle of pivotal movement is reached, the control means (74) can be switched over for further pivotal movement at different speeds.

6. A device or implement carrier according to claim 1, characterised in that the control means (74) is a two-position valve having the check valve which is operative only in the one position of the valve.

7. A device or implement carrier according to claim 6, characterised in that the two-position valve, with its actuating member (80), is arranged close to the pivotal mounting point (58) of a carrier arm (16) in the path of pivotal movement of a member (84) which pivots with the carrier arm (16).

8. A device or implement carrier according to claim 1, characterised in that the predetermined pivotal position in which the control means (74) is actuable includes an angle of about 5°, with the operating position.

9. A device or implement carrier according to claim 1, characterised in that the pivoting motors are double-acting hydraulic cylinders (38, 40) with the same displacements and with pressure fluid feed lines (96, 100 ; 102, 104) which are connected to the same pressure fluid source.

10. A device or implement carrier according to claim 2, characterised in that abutments (108, 112) which are fixed with respect to the frame structure are associated with the two carrier arms (14, 16), the abutments being arranged in different ways, for contact with the arms in the respective transportation positions thereof.

## Revendications

1. Instrument ou châssis porte-outils repliable et dépliable (12), en particulier pour machines agricoles, comportant une poutre porteuse principale (18) disposée horizontalement et transversalement à la direction de marche, aux extrémités de laquelle des bras porteurs (14, 16) sont chaque fois articulés de façon pivotante autour d'axes sensiblement parallèles à la direction de marche, ces bras étant déplaçables chaque fois au moyen de dispositifs de pivotement hydrauliques (38, 40) pouvant être actionnés dans les deux sens entre une position de travail abaissée ou dépliée et une position de transport repliée vers l'intérieur au-dessus de la poutre porteuse principale (18), ainsi qu'un circuit hydraulique de commande et d'alimentation pour les dispositifs de pivotement hydrauliques (38, 40), caractérisé en ce que le circuit hydraulique de commande et d'alimentation comporte, dans le conduit (96, 98) d'alimentation en fluide sous pression agissant lors du pivotement ou rabattement vers l'intérieur de l'un des bras porteurs (16) et aboutissant à l'un des dispositifs de pivotement (40), un dispositif (94) d'étranglement de la pression ou du débit, auquel est conjugué un conduit en dérivation (92), en ce qu'il est prévu un dispositif de commande (74) au moyen duquel le conduit (96, 98) d'alimentation en fluide sous pression peut être relié au dispositif d'étranglement (94) ou au conduit en dérivation (92), et en ce que le dispositif de commande (74) peut être actionné automatiquement en fonction de l'obtention d'une position de pivotement relative prédéterminée entre la poutre porteuse principale (18) et un bras porteur (14, 16), de telle sorte que les deux bras porteurs (14, 16) puissent, sur une partie ou un tronçon prédéterminé de leur course de pivotement depuis la position de travail jusque dans la position de transport, pivoter à des vitesses différentes.

2. Instrument ou châssis porte-outils suivant la revendication 1, dans lequel la longueur de la poutre porteuse principale (18) est inférieure à la somme des longueurs des bras porteurs (14, 16), caractérisé en ce que les positions de transport des deux bras (14, 16) sont différentes et, par rapport à la position de travail chaque fois concernée, l'un des bras (14) peut pivoter sur 180° jusque dans la position de transport, tandis que l'autre bras peut pivoter d'un angle compris entre 90° et 180°.

3. Instrument ou châssis porte-outils suivant la revendication 1, caractérisé en ce que les conduits (100, 104) d'alimentation en fluide sous pression agissant lors du pivotement vers l'extérieur des deux bras porteurs (14, 16) sont agencés et disposés de telle sorte que les deux bras puissent pivoter vers l'extérieur de la position de transport jusque dans la position de travail avec des vitesses en principe égales.

4. Instrument ou châssis porte-outils suivant l'une quelconque des revendications 1 à 3, caractérisé en ce qu'il est prévu, dans le conduit en dérivation (92), un clapet anti-retour ne laissant passer le fluide qu'en direction de l'un des dispositifs de pivotement (40).

5. Instrument ou châssis porte-outils suivant l'une quelconque des revendications 1 à 4, caractérisé en ce que le dispositif de commande (74) est disposé de telle sorte que, lors du pivotement vers l'intérieur des deux bras porteurs (14, 16), sur un premier tronçon de la course de pivotement à partir de la position de travail des deux bras porteurs (14, 16) puissent pivoter avec la même vitesse, et que, lorsqu'un angle de pivotement prédéterminé est atteint, le dispositif de commande (74) puisse subir une commutation pour passer à un pivotement ultérieur à des vitesses différentes.

6. Instrument ou châssis porte-outils suivant la revendication 1, caractérisé en ce que le dispositif de commande (74) est constitué par une valve à deux positions, qui comprend le clapet anti-retour agissant simplement dans l'une des positions de la valve.

7. Instrument ou châssis porte-outils suivant la revendication 6, caractérisé en ce que la valve à deux positions est disposée par son organe d'actionnement (80) au voisinage du point d'articulation (58) d'un bras porteur (16), dans la trajectoire de pivotement d'un élément (84) pivotant avec ce bras porteur (16).

8. Instrument ou châssis porte-outils suivant la revendication 1, caractérisé en ce que la position de pivotement prédéterminée dans laquelle le dispositif de commande (74) peut être actionné fait avec la position de travail un angle de 5° environ.

9. Instrument ou châssis porte-outils suivant la revendication 1, caractérisé en ce que les dispositifs de pivotement sont constitués par des vérins hydrauliques à double effet (38, 40) ayant mêmes débits de refoulement ou de déplacement et associés à des conduits d'alimentation en fluide sous pression (96, 100 ; 102, 104) raccordés à la même source de fluide sous pression.

10. Instrument ou châssis porte-outils suivant la revendication 2, caractérisé en ce que des butées (108, 122) fixées sur le châssis et présentant des dispositions différentes en vue d'une venue en butée dans la position de transport chaque fois concernée sont conjuguées aux deux bras porteurs (14, 16).

0 044 569

FIG. 1a

FIG. 1b

FIG. 1c

FIG. 1d

1

**FIG. 2**

FIG. 3

22

66

64

42

62

44

18

56

54

60

90

82

84

88

86

76

80

58

78

74

50

46

48

56

16

64

42

54

FIG. 4

FIG. 5

0 044 569